Europäisches Patentamt

(19) European Patent Office

Office européen des brevets

(11) Numéro de publication: **0 348 315**
**A1**

## (12) DEMANDE DE BREVET EUROPEEN

(21) Numéro de dépôt: **89420223.3**

(22) Date de dépôt: **20.06.89**

(51) Int. Cl.⁴: **B 62 M 9/12**

(30) Priorité: **21.06.88 FR 8808777**

(43) Date de publication de la demande:
**27.12.89 Bulletin 89/52**

(84) Etats contractants désignés:
**AT BE CH DE ES GB GR IT LI LU NL SE**

(71) Demandeur: **SIMPLEX S.A.**
**Rue Jean Moulin B.P. No. 60 Z.I. Couchey**
**F-21160 Marsannay La Cote (FR)**

(72) Inventeur: **Juy Henri**
**43 Rue Chabot Charny**
**F-21000 Dijon (FR)**

(74) Mandataire: **Dupuis, François**
**Cabinet Charras 3 Place de l'Hôtel-de-Ville BP 203**
**F-42005 St. Etienne Cédex 1 (FR)**

(54) **Dérailleur avant de bicyclettes ou véhicules similaires.**

(57) L'invention se rattache au secteur technique des accessoires pour cycles.

Le dérailleur selon la présente invention est remarquable en ce que la partie arrière desdites fourchettes (1) (2) et conformée pour recevoir un système de fixation rapide apte à assurer leur entretroisement.

FIG.1

FIG.2

FIG.3

FIG.6

**Description**

**Dérailleur avant de bicyclettes ou véhicules similaires.**

L'invention se rattache au secteur technique des accessoires pour cycles.

Généralement, les dérailleurs avant de bicyclettes sont composés pour l'essentiel d'une chape comprenant deux fourchettes parallèles et assujetties à un mécanisme de commande pour être déplacées en vue d'assurer le passage de la chaîne, d'un plateau de diamètre inférieur au plateau de diamètre supérieur et inversement.

Un problème que se propose de résoudre l'invention, est de simplifier la fixation au niveau de la partie arrière des fourchettes. En effet, toutes les fourchettes, quel que soit le type de dérailleur, sont reliées par un ensemble composé d'une vis engagée librement dans un fourreau entretoise et coopérant avec un écrou. Il y a donc trois pièces distinctes indépendantes. Les temps de montage et démontage s'en trouvent donc augmentés. En outre, le nombre de pièces augmente le coût.

Dans ces conditions, pour résoudre le problème posé, la partie arrière desdites fourchettes est conformée pour recevoir un système de fixation rapide apte à assurer leur entretoisement.

Avantageusement, le problème posé est résolu en ce que le système se compose d'un axe dont chacune des extrémités présente une gorge coopérant avec une lumière étranglée formée à partir de l'un des bords de la partie arrière de chacune des fourchettes ; les fourchettes et/ou l'axe entretoise, sont en matériau avec capacité de déformation élastique.

Un autre problème que se propose de résoudre l'invention, est de faciliter le passage de la chaîne notamment du petit plateau au plateau supérieur qui peut s'avérer parfois délicat en fonction de l'écart important de denture par exemple.

Pour résoudre ce problème posé, la face interne de l'une au moins des fourchettes est agencée avec des moyens aptes à faciliter le passage de la chaîne du plateau de diamètre inférieur au plateau de diamètre supérieur.

Le problème posé est résolu en ce que :

Les moyens sont constitués par des rouleaux montés libres en rotation.

La partie de la ou des fourchettes recevant les rouleaux, est agencée de sorte que lesdits rouleaux soient disposés en position de tangence ou de quasi-tangence, avec les flasques correspondants de la chaîne.

Les rouleaux sont disposés verticalement ou bien d'une manière oblique en étant orientés dans le sens de déplacement de la chaîne pour le passage des vitesses.

Les rouleaux sont cylindriques et/ou coniques.

L'invention est exposée ci-après plus en détail à l'aide des dessins annexés dans lesquels :

La figure 1 est une vue de face de la partie externe d'une fourchette.

La figure 2 est, à une échelle plus importante, une vue en coupe transversale considérée selon la ligne 2-2 de la figure 1.

La figure 3 est une vue de face de la partie interne de l'une des fourchettes selon l'invention.

Les figures 4 et 5 sont des vues semblables à la figure 3 montrant d'autres formes de réalisation.

La figure 6 est une vue en coupe transversale considérée selon la ligne 6-6 de la figure 3.

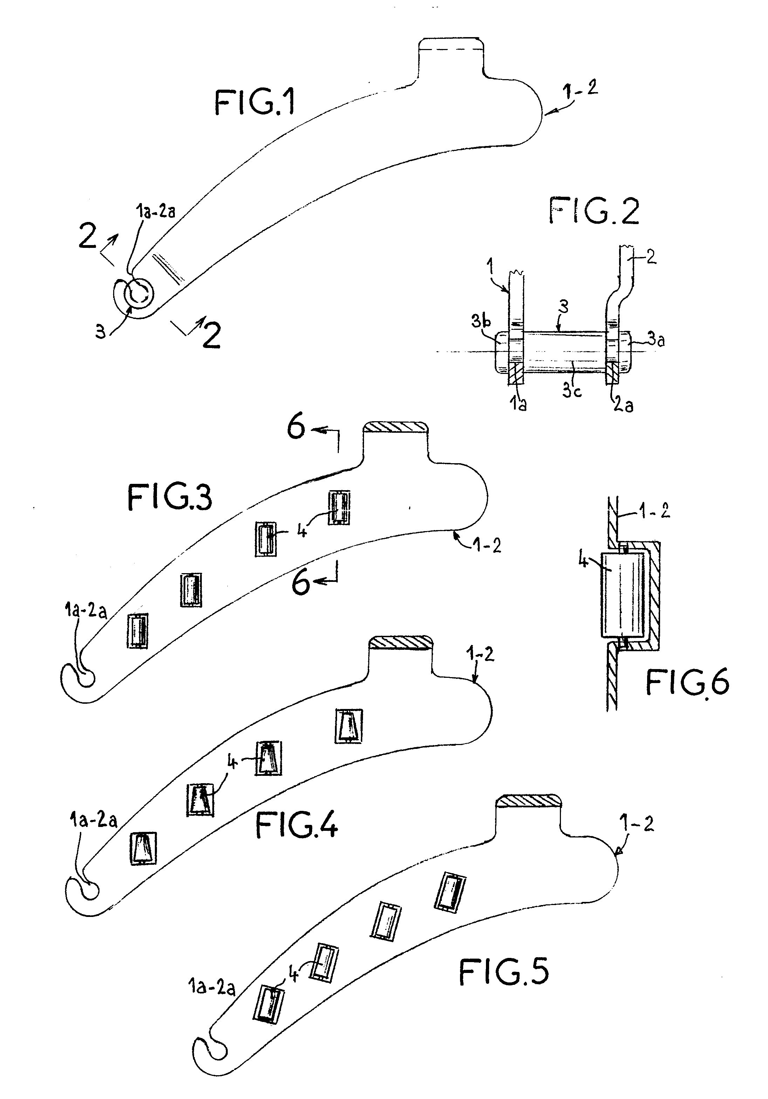

D'une manière connue, le dérailleur avant se compose d'une chape comprenant deux fourchettes parallèles (1) et (2). Selon l'invention, dans l'exemple illustré aux figures 1 et 2, la partie arrière desdites fourchettes (1) et (2) est reliée et entretoisée par un axe (3) dont chacune des extrémités présente une gorge annulaire (3a) - (3b) délimitant ainsi une portée médiane (3c) qui fait office d'entretoise. Chacune des gorges (3a) - (3b) coopère avec une lumière étranglée (1a) - (2a) établie à partir du bord supérieur de chaque fourchette (1) et (2).

Ainsi exécuté, l'axe (3), en combinaison avec les lumières (1a) - (2a) constitue un système de fixation rapide sous forme de clipsage.

Avantageusement, les fourchettes (1) - (2) et/ou l'axe (3) sont exécutés en matériau avec capacité de déformation élastique.

Suivant une autre caractéristique, la face interne de l'une au moins des fourchettes (1) et/ou (2) est agencée avec des moyens aptes à faciliter le passage de la chaîne du plateau de diamètre inférieur au plateau de diamètre supérieur notamment. Bien évidemment, cette caractéristique peut être considérée isolément, ou bien en combinaison avec les caractéristiques précédentes concernant le système de fixation rapide de la partie arrière des fourchettes.

Dans les exemples illustrés, les moyens sont constitués par une série de rouleaux indépendants (4) montés libre en rotation. La partie (1a) et/ou (2a) de la et/ou des fourchettes (1) - (2) est agencée pour permettre le montage tournant des rouleaux, de sorte que lesdits rouleaux soient disposés en position de tangence ou de quasi-tangence avec les flasques correspondants de la chaîne. Par exemple, les différents rouleaux (4) peuvent être montés à l'intérieur d'un évidement formé dans l'épaisseur de la ou des fourchettes concernées (figure 6).

Les rouleaux (4) sont cylindriques (figure 3) ou coniques (figure 4). De même, les rouleaux peuvent être disposés verticalement (figure 3) ou d'une manière oblique (figure 5). Dans ce dernier cas, les rouleaux (4) sont orientés dans le sens de déplacement de la chaîne pour le passage des vitesses pour conjuguer avantageusement les deux mouvements.

Les avantages ressortent bien de la description.

**Revendications**

-1- Dérailleur avant de bicyclettes ou véhicules similaires comprenant une chape avec deux fourchettes parallèles assujetties à un système de commande, caractérisé en ce que la partie arrière desdites fourchettes (1) (2) est conformée pour recevoir un système de fixation rapide apte à assurer leur entretoisement.

-2- Dérailleur selon la revendication 1, caractérisé en ce que le système se compose d'un axe (3) dont chacune des extrémités présente une gorge (3a - 3b) coopérant avec une lumière étranglée (1a - 2a) formée à partir de l'un des bords de la partie arrière de chacune des fourchettes (1-2).

-3- Dérailleur selon la revendication 2, caractérisé en ce que les fourchettes ( 1 - 2) et/ou l'axe entretoise (3), sont en matériau avec capacité de déformation élastique.

-4- Dérailleur selon la revendication 1, caractérisé en ce que la face interne de l'une au moins des fourchettes (1 - 2) est agencée avec des moyens (4) aptes à faciliter le passage de la chaîne du plateau de diamètre inférieur au plateau de diamètre supérieur.

-5- Dérailleur avant de bicyclettes ou véhicules similaires comprenant une chape avec deux fourchettes parallèles assujetties à un système de commande, caractérisé en ce que la face interne de l'une au moins des fourchettes (1 - 2) est agencée avec des moyens (4) aptes à faciliter le passage de la chaîne du plateau de diamètre inférieur au plateau de diamètre supérieur.

-6- Dérailleur selon l'une quelconque des revendications 4 et 5, caractérisé en ce que les moyens (4) sont constitués par des rouleaux (4) montés libres en rotation.

-7- Dérailleur selon la revendication 6, caractérisé en ce que la partie de la ou des fourchettes (1 - 2) recevant les rouleaux (4), est agencée de sorte que lesdits rouleaux (4) soient disposés en position de tangence ou de quasi-tangence, avec les flasques correspondants de la chaîne.

-8- Dérailleur selon la revendication 7, caractérisé en ce que les rouleaux (4) sont disposées verticalement.

-9- Dérailleur selon la revendication 7, caractérisé en ce que les rouleaux (4) sont disposés d'une manière oblique en étant orienté dans le sens de déplacement de la chaîne pour le passage des vitesses.

-10- Dérailleur selon la revendication 6, caractérisé en ce que les rouleaux (4) sont cylindriques et/ou coniques.

EP 0 348 315 A1

FIG.1

1-2

2

1a-2a

3

2

FIG.2

1

2

3

3b

3a

3c

1a

2a

6

FIG.3

4

1-2

6

1a-2a

1-2

FIG.6

1-2

4

1a-2a

4

FIG.4

1-2

1a-2a

4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 518 042 (HURET ET SES FILS.) * le document en entier * | 5,6 | B 62 M 9/12 |
| A | | 1,3 | |
| | --- | | |
| Y | FR-A- 610 452 (GETTING-JONAS-TITAN et al.) * le document en entier * | 5,6 | |
| A | | 7,8 | |
| | ----- | | |

|  | DOMAINES TECHNIQUES RECHERCHES (Int. Cl.4) |
|---|---|
| | B 62 M F 16 H |

Le présent rapport a été établi pour toutes les revendications

| Lieu de la recherche | Date d'achèvement de la recherche | Examinateur |
|---|---|---|
| BERLIN | 05-09-1989 | GERTIG I. |